# EUROPÄISCHE PATENTSCHRIFT

(11) **EP 0 483 493 B1**
(45) Veröffentlichungstag und Bekanntmachung des Hinweises auf die Patenterteilung: **30.11.1994**
(21) Anmeldenummer: 91115059.7
(22) Anmeldetag: 06.09.1991
(51) Int. Cl.: B66F 17/00

(54) **Flurförderzeug mit einer Überwachungseinrichtung für den Belastungszustand**
Fork lift truck with load condition monitoring device
Chariot élévateur avec dispositif de surveillance de l'état de charge

(30) Priorität: 28.09.1990 DE 4030748
(43) Veröffentlichungstag der Anmeldung: 06.05.1992
(73) Patentinhaber: Linde Aktiengesellschaft, 65189 Wiesbaden (DE)
(72) Erfinder: Abels, Theodor, Dipl.-Ing., W-8750 Aschaffenburg (DE); Honecker, Günter, Dipl.-Ing., W-6453 Seligenstadt 3 (DE)
(74) Vertreter: Schaefer, Gerhard, Dr.

(56) Entgegenhaltungen:
- DE-A- 3 203 553
- FR-A- 2 309 460
- FR-A- 2 356 592
- FR-A- 2 378 272
- GB-A- 1 479 511
- GB-A- 1 590 440

## Beschreibung

Die Erfindung betrifft ein Flurförderzeug mit einem Hubgerüst, daß um eine zumindest in bestimmten Betriebszuständen außerhalb der Radbasis angeordnete Neigeachse in einer Hubgerüstlagerung schwenkbar ist, und mit einer Überwachungseinrichtung zum Detektieren und Anzeigen des Belastungszustandes wobei die Überwachungseinrichtung mindestens eine Meßvorrichtung aufweist, die mit einer Meßdaten-Verrechnungseinheit in Verbindung steht, die an ein Belastungszustand-Anzeigegerät angeschlossen ist.

Flurförderzeuge mit außerhalb der Radbasis angeordneter Neigeachse des Hubgerüstes sind beispielsweise die üblichen Gegengewichts-Gabelstapler, bei denen die Hubgerüst-Neigeachse im frontseitigen Fahrzeugbereich quer zur Fahrzeuglängsachse angeordnet ist. Darüberhinaus nehmen auch sogenannte Quer-Gabelstapler die Last außerhalb der Radbasis mit einem quer zur Fahrtrichtung verschiebbaren Hubgerüst auf. Die Beförderung der Last erfolgt nachdem das Hubgerüst wieder ganz zurückgezogen ist. Auch Schubmast-Gabelstapler weisen ein verschiebbares Hubgerüst zur Aufnahme der Last außerhalb der Radbasis auf. Der besseren Übersichtlichkeit halber seien die nachfolgenden Ausführungen auf Gegengewichts-Gabelstapler bezogen, jedoch nicht auf diese beschränkt.

Durch die Aufnahme der zu transportierenden Last außerhalb der Radbasis entsteht bei Gegengewichts-Gabelstaplern ein Drehmoment um die Vorderachse. Ein gegensinnig wirkendes Drehmoment wird vom Eigengewicht des Gabelstaplers gebildet. Das aus der Last herrührende Drehmoment ist abhängig von der Gewichtskraft der Last und vom Abstand des Lastschwerpunktes zur Kippachse (Vorderachse), der im übrigen auch bei einer Neigebewegung des Hubgerüstes verändert wird. Bei Aufnahme zu großer Last oder bei zu großem Abstand des Lastschwerpunktes von der Kippachse besteht die Gefahr, daß die Kippgrenze des Gabelstaplers überschritten wird. Selbst wenn im statischen Zustand die Kippgrenze noch nicht erreicht ist, kann infolge dynamischer Kräfte bei fahrendem Fahrzeug, beispielsweise Fliehkräfte bei Kurvenfahrt oder Massenkräfte beim Abbremsen und Beschleunigen, der Gabelstapler umkippen. Es hat daher bereits vielfältige Bestrebungen gegeben, dies zu verhindern oder zumindest rechtzeitig dem Fahrer anzuzeigen, damit dieser Gegenmaßnahmen ergreifen kann.

So ist es aus der DE-OS 32 03 553 bekannt, den Ladezustand des Gabelstaplers aus dem Druck im Hubzylinder und dem Druck im Neigezylinder des Hubgerüstes zu ermitteln. Der jeweilige Ladezustand wird auf einem Anzeigefeld im Sichtbereich des Fahrers graphisch dargestellt. Wenn die Gefahr besteht, daß der Gabelstapler aufgrund eines ungünstigen Ladezustandes umkippt, wird dies zusätzlich signalisiert. Die Erfassung des Ladezustandes über den hydraulischen Druck hat den Nachteil, daß infolge der Befestigung der Hubzylinder am Hubgerüst und die dadurch bewirkte Positionsänderung der Hubzylinder bei einer Neigebewegung des Hubgerüstes eine Kraft gemessen wird, die nicht in allen Fällen der tatsächlichen Gewichtskraft entspricht, sondern lediglich einer Kraftkomponente in Wirkrichtung der Hubzylinderachse, was zu Ungenauigkeiten führt.

Aus der Druckschrift GB-A-1 590 440 ist ein gattungsgemäßes Flurförderzeug bekannt, das längs einer mittigen Vertikalachse zweigeteilt ist, wobei die beiden Hälften gelenkig miteinander verbunden sind. Das Fahrzeug ist als sogenannter Knicklenker ausgebildet. Im oberen Bereich der Gelenkverbindung ist eine Meßvorrichtung angeordnet, mit deren Hilfe der Beladungszustand des Fahrzeugs ermittelbar ist, um das Fahrzeug vor dem Kippen zu bewahren.

Die FR-A-2 378 272 zeigt ein Kranfahrzeug, bei dem in einem Gelenk zwischen einem Neigezylinder und einem teleskopierbaren Kranarm eine Meßvorrichtung zur Erfassung von Kräften angeordnet ist.

Der vorliegenden Erfindung liegt die Aufgabe zugrunde, ein Flurförderzeug eingangs genannter Art zur Verfügung zu stellen, bei dem die Gefahr des Umkippens durch eine im Hinblick auf die Erfassung von dynamischen Kräften verbesserte Überwachung des Belastungszustandes weiter verringert ist.

Diese Aufgabe wird erfindungsgemäß dadurch gelöst, daß mindestens zwei Meßvorrichtungen vorgesehen sind, die in der Hubgerüstlagerung längs der Neigachse voneinander beabstandet und zur Erfassung jeweils von vertikalen und parallel zur Fahrzeuglängsachse horizontalen Lagerkräften ausgebildet sind. Dadurch kann die Gewichtskraft der Last unabhängig von der Neigung des Hubgerüstes sehr exakt ermittelt werden. Es können sowohl Informationen über die Größe der Gewichtskraft der Last als auch über die Größe des daraus resultierenden Lastmomentes erhalten werden, also Informationen über den statischen Belastungszustand. Andererseits kann damit erstmalig der seitliche Lastversatz ermittelt und in die Überwachung miteinbezogen werden, was insbesondere für die Überwachung des dynamischen Belastungszustandes von großer Bedeutung ist. Nur in wenigen Fällen wird nämlich die Belastung des Gabelstaplers durch die Last genau auf der Längsmittelachse erfolgen. Zumeist wird die Last von den Gabelzinken seitlich leicht versetzt aufgenommen oder beispielsweise durch in den Gabelträger integrierte Seitenschieber zu Manövrierzwecken quer zur Fahrzeuglängsrichtung bewegt und danach nicht wieder in die Mittellage verschoben. Bei seitlich versetzter Belastung besteht bei Fahrbewegungen des Gabelstaplers, insbesondere bei Kurvenfahrten, daher viel eher die Gefahr, daß der Gabelstapler infolge von Fliehkräften umstürzt.

Zumindest bei vertikal ausgerichtetem Hubgerüst und bei waagerechter Stellung der das Lastmoment aufnehmenden Hubgerüst-Neigezylinder sowie bei einer Hubgerüstlagerung derart, daß die Neigeachse und die Kippachse des Gabelstaplers sich decken, entsprechen die vertikalen Lagerkräfte in der Hubgerüstlagerung der Gewichtskraft der Last, während die horizontalen Lagerkräfte in der Hubgerüstlagerung ein Maß für das Lastmoment darstellen. Bei einer Hubgerüstlagerung, bei der die Neigeachse nicht mit der Kippachse zusammenfällt und bei der die Neigezylinder nicht horizontal ausgerichtet sind, muß dies mathematisch berücksichtigt werden.

Die Summe der von den Meßvorrichtungen in der Hubgerüstlagerung erfassten vertikalen Lagerkräfte entspricht im statischen Belastungszustand der Gewichtskraft der aufgenommenen Last. Die parallel zur Fahrzeuglängsachse horizontalen Lagerkräfte in der Hubgerüstlagerung sind ein Maß für das aus der Last resultierende Lastmoment, das an der Kippachse angreift.

Weiterhin geben die in der Meßdaten-Verrechnungseinheit ausgewerteten Meßdaten Auskunft über die Symmetrie der Last auf den Gabelzinken und die Lastmomentänderung beim Neigen des Hubgerüstes, sowie über Änderungen der Belastungskraft und des Belastungsmomentes beim Bremsen, Beschleunigen und bei Kurvenfahrt des Gabelstaplers.

Gemäß einer vorteilhaften Ausführung des Erfindungsgegenstandes besteht die Hubgerüstlagerung aus zwei längs der Neigeachse voneinander beabstandeten Gelenkverbindungen die an den Seitenbereichen des Hubgerüstes angeordnet sind und jeweils einen Lagerbolzen aufweisen, wobei jeder Lagerbolzen mit Dehnungsmeßstreifen zur Aufnahme der vertikalen Lagerkräfte und Dehnungsmeßstreifen zur Aufnahme der parallel zur Fahrzeuglängsrichtung horizontalen Lagerkräfte versehen ist. Dadurch können die zur Überwachung des Belastungszustandes benötigten Belastungswerte einfach und kostengünstig erfasst werden. Dies kann gemäß einer anderen Ausbildung der Erfindung auch dadurch geschehen, daß jeder Lagerbolzen mit Aufnehmern für elektromagnetische Scherkraftmessungen in vertikaler und horizontaler Richtung versehen ist.

In Weiterbildung der Erfindung weist das Belastungszustand-Anzeigegerät ein Anzeigefeld mit einem zweidimensionalen Koordinatensystem auf, in dem auf der Abszisse das Belastungsmoment und auf der Ordinate die Belastungskraft als Variable vorgesehen sind, wobei der Belastungszustand des Gabelstaplers durch zwei Wertepaare dargestellt ist, denen die Kraftbeaufschlagung der beiden Meßvorrichtungen zugeordnet sind und wobei im Schnittpunkt jedes Wertepaares auf dem Anzeigefeld ein graphisches Symbol angezeigt wird. Mit Belastungskraft ist die Summe aus der Gewichtskraft der Last und aus gegebenenfalls weiteren, bei dynamischer Belastung auftretenden vertikalen Massenkräften gemeint. Das Belastungsmoment stellt die Summe der aus der Gewichtskraft und den Massenkräften herrührenden Momente dar.

An sich ist zwar eine graphische Darstellung des Belastungszustandes eines Gabelstaplers bereits bekannt, aber die hier beschriebene Darstellungsart ermöglicht eine weit verbesserte Überwachung, da die aus dem seitlichen Lastversatz herrührenden Belastungen in Form von zwei Wertepaaren aus Belastungskraft und Belastungsmoment angezeigt werden.

Zu diesem Zweck ist es günstig,wenn den beiden Wertepaaren unterschiedliche graphische Symbole zugeordnet sind. Beispielsweise können hier ein Punkt- und ein Kreissymbol vorgesehen werden, die jeweils das Signal der linken und der rechten Meßvorrichtung darstellen. Vergrößert sich der Abstand des Lastschwerpunktes von der Kippachse bei konstanter Last, so bewegen sich die Symbole auf dem Anzeigenfeld in horizontaler Richtung nach rechts. Erhöht sich hingegen die Last bei konstantem Abstand zur Kippachse, so bewegen sich die Symbole diagonal nach rechts oben. Bei Kurvenfahrt wirken Fliehkräfte auf die Last und damit auf das Hubgerüst und die Hubgerüstlagerung ein. Die Symbole werden daher auseinanderwandern und je nach Größe der Fliehkraft einen bestimmten Abstand voneinander einnehmen. Die Größe des Abstandes kann als Maß für die seitliche Kippsicherheit des Gabelstaplers herangezogen werden.

Wenn die Last exakt in der Mitte des Hubgerüstes aufgenommen wird, so überdecken sich im statischen Belastungszustand die Symbole. In diesem Zustand ist gemäß einer Ausgestaltung vorgesehen, daß bei annähernd deckungsgleichen Wertepaaren anstelle der beiden unterschiedlichen graphischen Symbole ein von den beiden Symbolen verschiedenes drittes graphisches Symbol im Überdeckungspunkt auf dem Anzeigefeld angezeigt wird.

Um den Grad der Belastung erkennen zu können, ist es vorteilhaft, wenn in dem Koordinatensystem Grenzlinien für die zulässige Belastungskraft und für das zulässige Belastungsmoment angezeigt sind. Bewegen sich die Symbole innerhalb eines Rahmens, der von der oberen Grenzlinie (Belastungskraft), der rechten Begrenzung (Belastungsmoment), der Abszisse und der Ordinate gebildet wird, so ist das Fahrzeug zumindest nach vorne kippstabil. Überschreiten die Symbole die obere Begrenzung, so ist die Belastungskraft zu groß. Überschreiten die Symbole die rechte Begrenzung, so ist das Belastungsmoment zu groß.

In Weiterbildung dieser Maßnahme wird vorgeschlagen, daß die Überwachungseinrichtung eine Meßvorrichtung zur Erfassung der Hubhöhe der Last aufweist, die an das Belastungszustand-Anzeigegerät angeschlossen ist, und daß die Grenzlinien in dem Koordinatensystem auf dem Anzeigefeld in Abhängigkeit von der Hubhöhe veränderbar sind. Dadurch kann unter Einbeziehung der Hubhöhe der fahrzeugspezifische Grenzbereich des Belastungszustandes festgelegt werden.

Um die Sicherheit des erfindungsgemäßen Gabelstaplers weiter zu erhöhen, ist vorgesehen, daß die Meßdaten-Verrechnungseinheit mit dem Antriebssystem des Gabelstaplers in Wirkverbindung steht und bei Überschreiten vorgegebener Grenzwerte der Belastungskraft und/oder des Belastungsmomentes das Antriebssystem in Richtung einer Unterschreitung der Grenzwerte steuernd beeinflußt wird. Es wird damit die Möglichkeit zu einem automatischen Eingriff in die Fahr-, Hub- und Neigeeinrichtung des Gabelstaplers geschaffen. Bei Quer-Gabelstaplern und Schubmast- Gabelstaplern kann damit das Ausfahren des Hubgerüstes aus der Radbasis heraus gestoppt oder das Hubgerüst weiter hereingefahren werden.

Es erweist sich darüberhinaus als zweckmäßig, die Meßdaten-Verrechnungseinheit mit dem Antriebssystem in Wirkverbindung zu bringen und bei Überschreiten einer vorgegebenen Differenz zwischen den Belastungen der beiden Meßvorrichtungen das Antriebssystem in Richtung eines Unterschreitens der Differenz steuernd zu beeinflussen. Auf diese Weise kann bei Unterschreiten einer vorgegebenen seitlichen Kippstabilität der Gabelstapler verlangsamt oder stillgesetzt werden. Dies gilt auch beim Fahren ohne Last, so daß ein Umkippen des leeren, eine Kurve befahrenden Staplers verhindert wird.

Wenn an die Meßdaten-Verrechnungseinheit eine Registriereinrichtung angeschlossen ist, kann der erfindungsgemäße Gabelstapler als Lastwiegeeinrichtung verwendet werden.

Weitere Vorteile und Einzelheiten der Erfindung werden anhand schematischer Figuren in einem Ausführungsbeispiel näher beschrieben. Dabei zeigen:
- Figur 1: die Kräfteverhältnisse an einem Hubgerüst
- Figur 2: eine Gelenkverbindung zwischen Hubgerüst und Gabelstapler im Horizontalschnitt
- Figur 3: ein Blockschaltbild der Überwachungseinrichtung
- Figur 4: das auf dem Anzeigefeld der Überwachungseinrichtung dargestellte Koordinatensystem.

Auf den Gabelzinken 1 eines Hubgerüstes 2 eines Gegengewichts-Gabelstaplers liegt eine Last 3 auf. Das Hubgerüst 2 ist in einer Hubgerüstlagerung um eine Neigeachse N schwenkbar gelagert und mit dem in den Figuren nicht dargestellten Fahrzeugrahmen des Gabelstaplers verbunden. An dem Hubgerüst 2 ist ferner ein hydraulischer Neigezylinder 4 angelenkt, um die Schwenkbewegung erzeugen zu können. Die von der Last 3 ausgehende vertikale Gewichtskraft F_{Q} greift im Lastschwerpunkt in einem Abstand a zur Neigeachse N an und erzeugt ein Lastmoment. Entgegengerichtet und gleich groß ist eine vertikale Reaktionskraft (Lagerkraft) F_{V} in der Hubgerüstlagerung Dem Lastmoment entgegen wirkt ein gleichgroßes Reaktionsmoment, das aus einer Kraft F_{N} des Neigezylinders herrührt, und in einem Abstand b zur Neigeachse N angreift. Eine zur Neigezylinderkraft F_{N} entgegengerichtet und gleichgroße parallel zur Fahrzeuglängsachse horizontale Reaktionskraft (Lagerkraft) F_{H} in der Hubgerüstlagerung sorgt für den Kräfteausgleich. Die vertikale Reaktionskraft F_{V} entspricht der Gewichtskraft F_{Q} der aufgenommenen Last 3. Die horizontale Reaktionskraft F_{H} ist ein Maß für das von der Last 3 erzeugte Lastmoment. Dies gilt zunächst nur für rein statische Belastung. Bei dynamischer Belastung, nämlich beim Beschleunigen und Bremsen des Fahrzeuges, ändert sich infolge der Massenträgheitskraft der Last 3 das Moment um die Neigeachse und damit die Reaktionskraft F_{H}. Es versteht sich von selbst, daß bereits die Gewichtskraft des leeren Hubgerüstes der Hubgerüstlagerung Reaktionskräfte erzeugt, die bei meßtechnischer Erfassung der Lagerkräfte zumindest bei rein statischer Belastung durch einen Nullabgleich zu kompensieren sind, so daß nur darüber hinausgehende Kräfte relevant sind.

Der Lastschwerpunktabstand a ist veränderlich und hängt zum einen von der Art der Last 3 ab und zum anderen von der Position der Last 3 auf den Gabelzinken 1 sowie von der Neigung des Hubgerüstes 2.

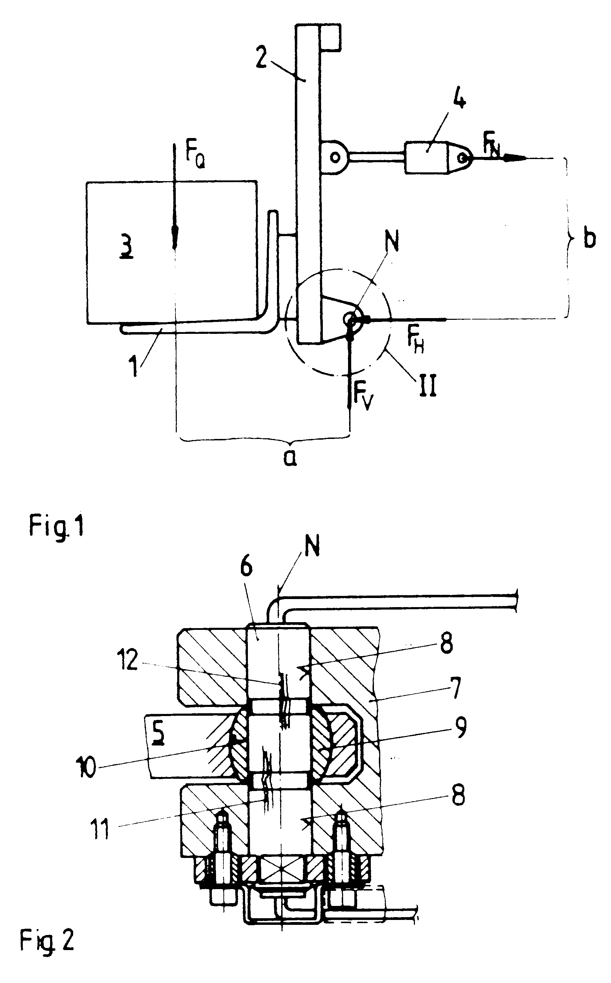

Auch die seitliche Position der Last 3 auf den Gabelzinken 1 ist veränderlich (das heißt in Figur 1 in Richtung in die Zeichenebene hinein oder aus der Zeichenebene heraus veränderlich). Im Idealfall liegt der Lastschwerpunkt in der Mitte zwischen den beiden Gabelzinken.

Hubgerüste sind in der Regel über rechte und linke Gelenkverbindungen mit dem Gabelstapler verbunden. Ein solche Gelenkverbindung ist in Figur 2 dargestellt. Dabei ist ein Auslegerteil 5 des Hubgerüstes 2 mittels eines Lagerbolzens 6 mit einem U-förmigen Aufnahmeteil 7 des Fahrzeugrahmens des Gabelstaplers verbunden. Zweckmäßigerweise sitzt der Lagerbolzen 6 verdrehfest in Aufnahmebohrungen 8 des Aufnahmeteiles 7. Im Mittelbereich des Lagerbolzens 6 ist dieser mit einer Kugelhülse 9 verdrehfest verbunden, die in einer Bohrung 10 des Auslegerteiles 5 des Hubgerüstes 2 gelagert ist. Die Relativbewegung beim Neigen des Hubgerüstes zwischen dem Hubgerüst und dem Fahrzeugrahmen findet also zwischen Kugelhülse 9 und Bohrung 10 des Auslegerteiles 5 statt. Die solcherart gestaltete, aus zwei der beschriebenen Gelenkverbindungen bestehende Hubgerüstlagerung nimmt die Reaktionskräfte F_{V} und F_{H} auf. Da zwei Gelenkverbindungen vorgesehen sind, erfolgt eine Aufteilung der Reaktionskräfte in Abhängigkeit vom seitlichen Lastversatz. Hinzu kommen unterschiedliche Belastungen der Gelenkverbindungen bei Kurvenfahrt infolge von Fliehkräften. Die Reaktionskraft F_{H} verändert sich darüberhinaus aufgrund von Massenkräften beim Beschleunigen und Abbremsen des Gabelstaplers. Zum Erfassen des Belastungszustandes ist jede Gelenkverbindung mit einer Meßvorrichtung versehen. Die Meßvorrichtungen bestehen in diesem Beispiel aus Dehnungsmeßstreifen. Dabei sind Dehnungsmeßstreifen 11 beispielsweise zur Erfassung der parallel zur Fahrzeuglängsrichtung horizontalen Reaktionskräfte F_{H} vorgesehen und Dehnungsmeßstreifen 12 zur Erfassung der vertikalen Reaktionskräfte F_{V}. Die Dehnungsmeßstreifen 11 und 12 erzeugen zu den Reaktionskräften F_{V} und F_{H} proportionale Signale U. Die Reaktionskräfte F_{V} und F_{H} können auch über magneto-elastische Scherkraftmessung ermittelt werden.

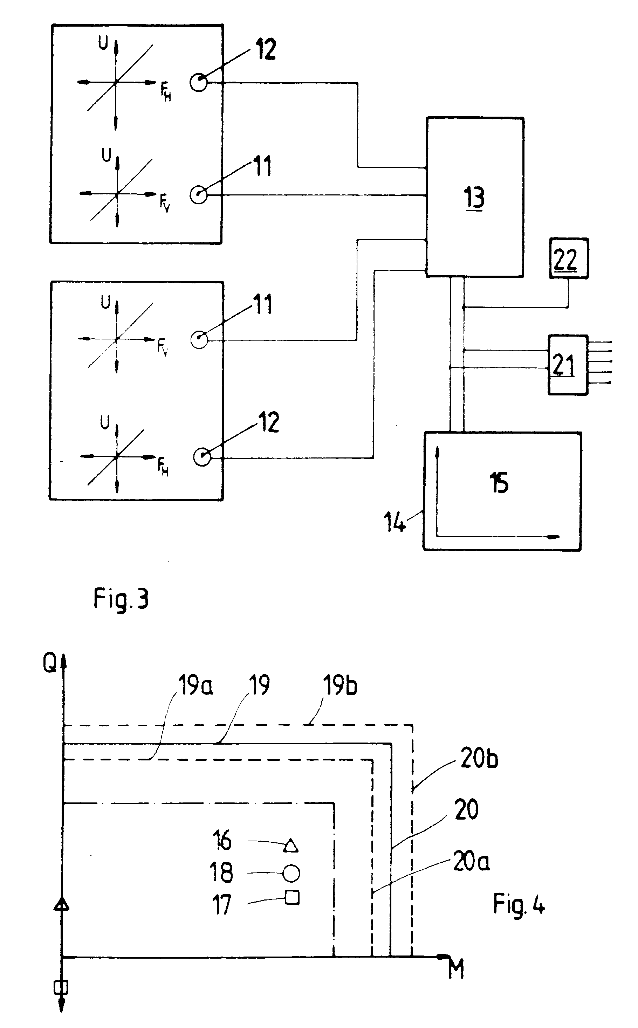

Wie aus Figur 3 ersichtlich ist, werden die von den Dehnungsmeßstreifen 11 und 12 erzeugten Signale an eine Meßdaten-Verrechnungseinheit 13 weitergegeben, die an ein Belastungszustand-Anzeigegerät 14 angeschlossen ist. Das Belastungszustand-Anzeigegerät 14 weist ein Anzeigefeld 15 auf, das möglichst im Blickfeld des Fahrers angeordnet ist.

Auf dem Anzeigefeld 15 ist ein zweidimensionales Koordinatensystem dargestellt. Auf der Abszisse ist das Belastungsmoment M als Variable vorgesehen und auf der Ordinate die Belastungskraft Q. Das von den Dehnungsmeßstreifen 11 und 12 der Meßvorrichtung jeder Gelenkverbindung gelieferte Wertepaar F_{V}/F_{H} wird als Wertepaar Belastungsmoment M/Belastungskraft Q im Koordinatensystem graphisch angezeigt. Zu diesem Zweck wird im Schnittpunkt jedes der beiden Wertepaare ein eigenes graphisches Symbol verwendet, beispielsweise ein Dreieck 16 für die linke Gelenkverbindung und ein Quadrat 17 für die rechte Gelenkverbindung. Im Falle, daß die Last exakt mittig zwischen den beiden Gabelzinken 1 aufgenommen ist, überdecken sich die Symbole. Es kann dann ein gemeinsames Symbol beispielsweise ein Kreis 18 angezeigt werden. Wenn sich bei gleichbleibender Last der Abstand a des Lastschwerpunktes zur Neigeachse N vergrößert, so bewegen sich die Symbole 16 und 17 (bzw. das Symbol 18) nach rechts (Vergrößerung des Belastungsmomentes). Eine Vergrößerung der Gewichtskraft der Last bei gleichbleibendem Abstand a führt zu einer Diagonalbewegung nach rechts oben, da sich ja auch das Belastungsmoment erhöht. In dem Koordinatensystem ist eine Grenzlinie 19 für die zulässige Nennbelastungskraft und eine Grenzlinie 20 für das zulässige Nennbelastungsmoment dargestellt. Bewegen sich die Symbole 16 und 17 bzw. 18 innerhalb des durch die Abszisse und die Ordinate sowie die Grenzlinien 19 und 20 bestimmten Bereiches, so ist der Gabelstapler kippstabil. Die Grenzlinien sind bevorzugt in Abhängigkeit von der Hubhöhe der Last veränderbar. Die Hubhöhe kann beispielsweise durch Messen des Ölstandes in dem Behälter, der die Hubzylinder mit Öl versorgt, ermittelt werden. Es ist vorteilhaft, wenn bereits vor Erreichen der Grenzlinie der Fahrer zusätzlich optisch oder akustisch gewarnt wird. Zu diesem Zweck sind vorgeschaltete Grenzlinien 19a und 20a vorgesehen, bei deren Erreichen bzw. Überschreiten entsprechende Warnsignale abgegeben werden. Im Falle, daß die zulässige Belastungskraft bzw. das zulässige Belastungsmoment um einen bestimmten Betrag überschritten wird, was durch nachgeschaltete Grenzlinien 19b und 20b überwacht werden kann, ist vorgesehen, daß Eingriffe in das Antriebssystem des Gabelstaplers in Richtung auf ein Unterschreiten der Grenzwerte erfolgen. Zu diesem Zweck ist an die Meßdaten-Verrechnungseinheit 13 ein Kontrollgerät 21 angeschlossen, das beispielsweise mit dem Lenk- und Bremssystem, dem Fahrgeber und den Hub- und Neigeeinrichtungen in Verbindung steht.

Wie erwähnt, werden bei einem seitlichen Lastversatz zwei graphische Symbole 16 und 17 im Koordinatensystem angezeigt. Der Abstand der Symbole voneinander stellt bei Kurvenfahrt ein Maß für die Kippbelastung dar. Es ist zweckmäßig, eine zulässige Spreizung vorzugeben, bei deren Überschreiten Warnsignale abgegeben oder Maßnahmen zur Sicherstellung der Kippstabilität eingeleitet werden. Bei Kurvenfahrt ohne Last bewegen sich die graphischen Symbole 16 und 17 auf der Ordinate voneinander weg bzw. aufeinander zu. Auch hier ist eine maximale Spreizung vorgesehen, um ein Umkippen des Gabelstaplers zu verhindern.

Wegen der beim Fahren auftretenden Vibrationen und Stößen ist es nötig, die Überwachungseinrichtung mit einer ausreichenden Dämpfung zu versehen. Es ist auch möglich, während der Fahrt auf eine Anzeige der Wertepaare zu verzichten und lediglich das optische oder akustische Warnsignal und Eingriffe in das Antriebssystem zuzulassen.

An die Meßdaten-Verrechnungseinheit 13 ist eine Registriereinrichtung 22 angeschlossen, mit deren Hilfe Angaben über die vom Gabelstapler transportierten Lasten gespeichert werden können.

## Patentansprüche

1. Flurförderzeug mit einem Hubgerüst (2), das zumindest in bestimmten Betriebszuständen um eine außerhalb der Radbasis angeordnete Neigeachse (N) in einer Hubgerüstlagerung schwenkbar ist, und mit einer Überwachungseinrichtung zum Detektieren und Anzeigen des Belastungszustandes, wobei die Überwachungseinrichtung mindestens eine Meßvorrichtung aufweist, die mit einer Meßdaten-Verrechnungseinheit (13) in Verbindung steht, die an ein Belastungszustand-Anzeigegerät (14) angeschlossen ist, **dadurch gekennzeichnet, daß** mindestens zwei Meßvorrichtungen vorgesehen sind, die in der Hubgerüstlagerung längs der Neigeachse voneinander beabstandet und zur Erfassung jeweils von vertikalen und parallel zur Fahrzeuglängsachse horizontalen Lagerkräften ausgebildet sind.

2. Flurförderzeug nach Anspruch 1, dadurch gekennzeichnet, daß die Hubgerüstlagerung aus zwei längs der Neigeachse (N) voneinander beabstandeten Gelenkverbindungen (5, 6, 7) besteht, die an den Seitenbereichen des Hubgerüstes (2) angeordnet sind und jeweils einen Lagerbolzen (6) aufweisen, wobei jeder Lagerbolzen (6) mit Dehnungsmeßstreifen (12) zur Aufnahme der vertikalen Lagerkräfte und Dehnungsmeßstreifen (11) zur Aufnahme der parallel zur Fahrzeuglängsrichtung horizontalen Lagerkräfte versehen ist.

3. Flurförderzeug nach Anspruch 1, dadurch gekennzeichnet, daß die Hubgerüstlagerung aus zwei längs der Neigeachse (N) voneinander beabstandeten Gelenkverbindungen (5, 6, 7) besteht, die an den Seitenbereichen des Hubgerüstes (2) angeordnet sind und jeweils einen Lagerbolzen (6) aufweisen, wobei jeder Lagerbolzen mit Aufnehmern für magneto-elastische Scherkraftmessungen in vertikaler und horizontaler Richtung versehen ist.

4. Flurförderzeug nach einem der Ansprüche 1 bis 3, dadurch gekennzeichnet, daß das Belastungszustand-Anzeigegerät (14) ein Anzeigefeld (15) mit einem zweidimensionalen Koordinatensystem aufweist, in dem auf der Abszisse das Belastungsmoment und auf der Ordinate die Belastungskraft als Variable vorgesehen sind, wobei der Belastungszustand des Gabelstaplers durch zwei Wertepaare dargestellt ist, denen die Kraftbeaufschlagung der beiden Meßvorrichtungen zugeordnet sind und wobei im Schnittpunkt jedes Wertepaares auf dem Anzeigefeld ein graphisches Symbol angezeigt wird.

5. Flurförderzeug nach Anspruch 4, dadurch gekennzeichnet, daß den beiden Wertepaaren unterschiedliche graphische Symbole (16, 17) zugeordnet sind.

6. Flurförderzeug nach Anspruch 5, dadurch gekennzeichnet, daß bei annähernd deckungsgleichen Wertepaaren anstelle der beiden unterschiedlichen graphischen Symbole (16, 17) ein von den beiden Symbolen verschiedenes drittes graphisches Symbol (18) im Überdeckungspunkt auf dem Anzeigefeld (15) angezeigt wird.

7. Flurförderzeug nach einem der Ansprüche 4 bis 6, dadurch gekennzeichnet, daß in dem Koordinatensystem Grenzlinien für die zulässige Belastungskraft (19) und für das zulässige Belastungsmoment (20) angezeigt sind.

8. Flurförderzeug nach Anspruch 7, dadurch gekennzeichnet, daß die Überwachungseinrichtung eine Meßvorrichtung zu Erfassung der Hubhöhe der Last aufweist, die an das Belastungszustand-Anzeigegerät (14) angeschlossen ist und daß die Grenzlinien (19, 20) in dem Koordinatensystem auf dem Anzeigefeld (15) in Abhängigkeit von der Hubhöhe veränderbar sind.

9. Flurförderzeug nach einem der vorangegangenen Ansprüche, dadurch gekennzeichnet, daß die Meßdaten-Verrechnungseinheit (13) mit dem Antriebssystem des Gabelstaplers in Wirkverbindung steht und bei Überschreiten vorgegebener Grenzwerte der Belastungskraft und/oder des Belastungsmomentes das Antriebssystem in Richtung eines Unterschreitens der Grenzwerte steuern beeinflußt wird.

10. Flurförderzeug nach einem der vorangegangenen Ansprüche, dadurch gekennzeichnet, daß die Meßdaten-Verrechnungseinheit (13) mit dem Antriebssystem in Wirkverbindung steht und bei Überschreiten einer vorgegebenen Differenz zwischen den Belastungen der beiden Meßvorrichtungen das Antriebssystem in Richtung einer Unterschreitung der Differenz steuernd beeinflußt wird.

11. Flurförderzeug nach einem der vorangegangenen Ansprüche, dadurch gekennzeichnet, daß an die Meßdaten-Verrechnungseinheit (13) eine Registriereinrichtung (22) angeschlossen ist.

## Claims

1. Industrial truck with a lifting framework (2), which at least in certain operating states is pivotable about a tilting axis (N) disposed outside the wheelbase in a lifting framework mounting, and with a monitoring device for detecting and indicating the loading state, the monitoring device exhibiting at least one measuring device which is in connection with a measuring data calculating unit (13) which is connected to a loading state indicating device (14), characterised in that at least two measuring devices are provided which are distanced from one another along the tilting axis in the lifting framework mounting and are each embodied for detecting vertical mounting forces and horizontal mounting forces parallel to the longitudinal axis of the vehicle.

2. Industrial truck according to claim 1, characterised in that the lifting framework mounting consists of two hinged joints (5, 6, 7) distanced from one another along the tilting axis (N) which are disposed at the side areas of the lifting framework (2) and each exhibit a mounting pin (6), each mounting pin (6) being provided with strain gauges (12) to pick up the vertical mounting forces and strain gauges (11) to pick up the horizontal mounting forces parallel with the longitudinal axis of the vehicle.

3. Industrial truck according to claim 1, characterised in that the lifting framework mounting consists of two hinged joints (5, 6, 7) distanced from one another along the tilting axis (N) which are disposed at the side areas of the lifting framework (2) and each exhibit a mounting pin (6), each mounting pin being provided with pickups for magneto-elastic shear force measurements in the vertical and horizontal direction.

4. Industrial truck according to one of claims 1 to 3, characterised in that the loading state indicating device (14) exhibits a display (15) with a two-dimensional system of co-ordinates in which the loading moment and the loading force are provided as variables on the abscissa and on the ordinate respectively, the loading state of the forklift truck being illustrated by two pairs of values corresponding to the forces acting on the two measuring devices, and a graphic symbol being indicated at the point of intersection of each pair of values on the display.

5. Industrial truck according to claim 4, characterised in that different graphic symbols (16, 17) are allocated to the two pairs of values.

6. Industrial truck according to claim 5, characterised in that when the pairs of values roughly coincide, instead of the two different graphic symbols (16, 17), a third graphic symbol (18) different from the two symbols is indicated at the point of coincidence on the display (15).

7. Industrial truck according to one of claims 4 to 6, characterised in that limit lines for the permissible loading force (19) and for the permissible loading moment (20) are indicated in the system of co-ordinates.

8. Industrial truck according to claim 7, characterised in that the monitoring device exhibits a measuring device for detecting the lifting height of the load which is connected to the loading state indicating device (14), and in that the limit lines (19, 20) in the system of co-ordinates on the display (15) can be altered according to the lifting height.

9. Industrial truck according to one of the preceding claims, characterised in that the measuring data calculating unit (13) is in operative connection with the driving system of the forklift truck and when set limits for the loading force and/or the loading moment are exceeded, the driving system is influenced in order to bring the values below the set limits.

10. Industrial truck according to one of the preceding claims, characterised in that the measuring data calculating unit (13) is in operative connection with the driving system and when a set difference between the loadings of the two measuring devices is exceeded, the driving system is influenced in order to bring the difference below the set amount.

11. Industrial truck according to one of the preceding claims, characterised in that a recording device (22) is connected to the measuring data calculating unit (13).

## Revendications

1. Chariot élévateur comportant un cadre de levage (2) qui, au moins dans certaines situations de travail, peut basculer autour d'un axe d'inclinaison (N) monté dans un palier porteur et situé à l'extérieur du polygone de roulement, un dispositif de surveillance servant à détecter et à signaler l'état des charges et disposant d'un dispositif de mesure relié à une unité de calcul des valeurs des mesures (13), elle-même raccordée à un appareil indicateur de l'état de chargement (14), caractérisé en ce qu'il comprend au moins deux dispositifs de mesure, montés dans le palier porteur du cadre de levage, espacés l'un de l'autre le long de l'axe d'inclinaison et conçus pour prendre en compte, chacun, la force verticale et la force horizontale parallèle à l'axe longitudinal du chariot, s'exerçant sur le palier.

2. Chariot élévateur selon la revendication 1, caractérisé en ce que le palier porteur du cadre de levage est composé de deux articulations (5, 6, 7), espacées l'une de l'autre le long de l'axe d'inclinaison (N) et situées latéralement par rapport au cadre (2), chaque articulation comportant un axe porteur (6) équipé de bandes extensométriques (12) servant à mesurer la force verticale exercée sur l'axe, ainsi que de bandes extensométriques (11) servant à mesurer la force horizontale exercée sur l'axe, parallèlement à l'axe longitudinal du chariot.

3. Chariot élévateur selon la revendication 1, caractérisé en ce que le palier porteur du cadre de levage est composé de deux articulations (5, 6, 7), espacées l'une de l'autre le long de l'axe d'inclinaison (N) et situées latéralement par rapport au cadre (2), chaque articulation étant équipée de récepteurs de mesures magnéto-élastiques des forces de cisaillement s'exerçant verticalement et horizontalement.

4. Chariot élévateur selon l'une des revendications 1 à 3, caractérisé en ce que l'appareil indicateur de l'état des chargements (14) comporte un écran de visualisation (15) équipé d'un système de coordonnées rectangulaires en deux dimensions, indiquant en abscisses le couple de la charge et en ordonnées le poids de la charge, de sorte que l'état de chargement du chariot est représenté par deux paires de valeurs correspondant à l'action des forces sur les dispositifs de mesure, un symbole graphique correspondant à chacune des paires apparaissant sur l'écran, au point de rencontre de l'abscisse et de l'ordonnée correspondantes.

5. Chariot élévateur selon la revendication 4, caractérisé en ce que des symboles différents (16, 17) sont associés aux deux paires de valeurs.

6. Chariot élévateur selon la revendication 5, caractérisé en ce que, pour des paires de valeurs se recouvrant sensiblement, les deux symboles graphiques différents (16, 17) sont remplacés, au point de recouvrement sur l'écran de visualisation (15), par un troisième symbole graphique différent.

7. Chariot élévateur selon l'une des revendications 4 à 6, caractérisé en ce que le système de coordonnées est complété par des lignes frontières correspondant à la force de chargement (19) et au couple de chargement (20) maximaux admissibles.

8. Chariot élévateur selon la revendication 7, caractérisé en ce que le dispositif de surveillance comprend un dispositif de mesure de la hauteur de levage de la charge, raccordé à l'appareil indicateur (14) de l'état de chargement, les lignes frontières (19, 20) dans le système de coordonnées de l'écran (15) pouvant varier en fonction de la hauteur de levage.

9. Chariot élévateur selon l'une des revendications précédentes, caractérisé en ce que l'unité (13) de calcul des valeurs mesurées est reliée au système d'entraînement du chariot élévateur de manière à intervenir, si des valeurs limités données de la force et/ou du couple de chargement sont dépassées, pour que le système d'entraînement agisse dans le sens d'un retour en dessous des limites.

10. Chariot élévateur selon l'une des revendications précédentes, caractérisé en ce que l'unité de calcul (13) des valeurs mesurées est reliée au système d'entraînement du chariot élévateur de manière à intervenir, si la différence entre les efforts relevés par les dispositifs de mesure dépasse une certaine valeur, pour que le système d'entraînement agisse dans le sens d'un retour de la différence en dessous de sa valeur limite.

11. Chariot élévateur selon l'une des revendications précédentes, caractérisé en ce qu'un dispositif enregistreur (22) est raccordé à l'unité (13) de calcul des valeurs mesurées.
